# EUROPEAN PATENT SPECIFICATION

(11) **EP 1 104 865 B1**
(45) Date of publication and mention of the grant of the patent: **28.09.2005**
(21) Application number: 00204263.8
(22) Date of filing: 30.11.2000
(51) Int. Cl.: F16L 25/00

(54) **A connector for corrugated conduits**
Verbinder für gewellte Rohre
Connecteur pour conduits ondulés

(30) Priority: 01.12.1999 EP 99830747
(43) Date of publication of application: 06.06.2001
(73) Proprietor: Legrand S.p.A., 20080 Zibido San Giacomo MI (IT)
(72) Inventor: Bogogna, Giancarlo, 28010 Vaprio d'Agogna (Novara) (IT); Cagnoni, Paolo, 20090 Pieve Emanuele (Milano) (IT)
(74) Representative: Siniscalco, Fabio

(56) References cited:
- US-A- 4 328 979
- US-A- 4 440 425
- US-A- 5 356 181
- US-A- 5 884 943

## Description

The present invention relates to a connector for corrugated conduits for electrical cables and, in particular, to a connector for corrugated conduits comprising a body which can house a corrugated conduit by being fitted thereon, the body comprising means for clamping the corrugated conduit and means for operating the clamping means.

Connectors for corrugated conduits for electrical cables are widely known in the field and generally comprise a hollow main body for housing a portion of a corrugated conduit. At the opposite end to that through which the corrugated conduit is inserted, the body has a threaded portion so that it can be screwed onto any corresponding threaded portion which is present, for example, on the body of a piece of apparatus.

The corrugated conduit can then be secured inside the body by various clamping means.

These means may be constituted by two flange-like lateral portions of the body which are symmetrical with respect to a plane extending through the axis of the body. The flanges are connected to the body by articulated connection means which allow them to bend towards the body so as to cover respective openings formed in its wall.

The flanges also have teeth for forming a restrained closure on the body and further comprise tongues for engaging the channels of the corrugated conduit.

Alternatively, the clamping means may be constituted by a fork-shaped element which can be inserted in an opening in the side wall of the body, transversely relative to the axis of the body, the fork-shaped element having, at its two ends, two teeth which can snap engage in corresponding slots suitably formed in the side wall of the body. The fork-shaped element also has projections for engaging in the channels of the corrugated conduit.

US 4 328 979 describes a connector for corrugated conduits comprising a body which can house a corrugated conduit and which has engagement means which can be operated in order to restrain the corrugated conduit in the body. The connector further comprises a ring nut which is movable on the body and which, in a first operative condition, leaves the engagement means free to be disengaged from the channels of the corrugated conduit and, in a second operative condition, keeps the engagement means fitted in the channels.

However, the above-mentioned solutions have some disadvantages.

First of all, the connections are not secured in an easy way against unwanted displacement of the ring nut.

Moreover, the clamping means described above are quite complex structurally and this causes some difficulty during their use. In particular, the operation to release the clamping means is somewhat complex since it is necessary to use a tool to forcibly disengage the means from the body.

Moreover, connectors for corrugated conduits are often not easily accessible to technicians who have to set up fitting or dismantling operations.

There is consequently a great need to provide a connector for corrugated conduits which is practical, functional and secure.

The problem upon which the present invention is based is therefore that of devising a connector for corrugated conduits which has structural and functional characteristics such as to satisfy the above-mentioned requirements and at the same time to prevent the problems of connectors for corrugated conduits of the prior art.

This problem is solved by a connector for corrugated conduits for electrical cables having the characteristics recited in the appended claims.

Further characteristics and advantages of the connector for corrugated conduits according to the present invention will become clear from the following description of a preferred embodiment thereof, given by way of non-limiting example with reference to the appended drawings, in which:
Figure 1 is a side view of the body of the connector for corrugated conduits according to the invention,
Figure 2 shows the connector body of Figure 1 from below,
Figure 3 is a section through the connector body, taken on the line III-III of Figure 1,
Figure 4 is a section through the connector body, taken on the line IV-IV of Figure 1,
Figure 5 is a section through the connector body, taken on the line V-V of Figure 2,
Figure 6 is a side view of a ring nut according to the invention,
Figure 7 shows the ring nut of Figure 6 from below,
Figure 8 is a section through the ring nut, taken on the line VIII-VIII of Figure 6,
Figure 9 is a section through the ring nut, taken on the line IX-IX of Figure 7,
Figure 10 is a section through the ring nut, taken on the line X-X of Figure 7,
Figure 11 is a side view of a ring nut and a body according to the invention, not assembled,
Figure 12 shows the ring nut and the body of Figure 11 assembled,
Figure 13 is a view showing the ring nut and the body of Figure 11 from below,
Figure 14 is a section through the ring nut and the body, taken on the line XIV-XIV of Figure 12,
Figure 15 is a side view of a ring nut and of a body according to the invention, in a first operative condition,
Figure 16 is a section through the ring nut and the body of Figure 15, taken on the line XIV-XIV of Figure 12,
Figure 17 is a section through the ring nut and the body of Figure 15, taken on the line V-V of Figure 2,
Figure 18 is a partial section through the body and the ring nut of Figure 15 with a corrugated conduit inserted, taken on the line V-V of Figure 2,
Figure 19 is a side view of the connector with a corrugated conduit inserted, in a second operative condition,
Figure 20 is a section through the connector with the corrugated conduit of Figure 19, taken on the line III-III of Figure 1,
Figure 21 is a section through the connector with the corrugated conduit of Figure 20, taken on the line V-V of Figure 2,
Figure 22 is a side view of the connector in a third operative condition thereof,
Figure 23 is a section similar to that of Figure 20, through the connector of Figure 22,
Figure 24 shows a connector with a corrugated conduit not inserted,
Figure 25 shows a connector with a corrugated conduit inserted, in a fourth operative condition,
Figure 26 shows a connector with a corrugated conduit inserted, in a fifth operative condition,
Figure 27 shows a connector with a corrugated conduit inserted, in a sixth operative condition,
Figure 28 shows a gasket for a connector according to the invention, from above,
Figure 29 is a section through a gasket, taken on the line XXIX-XXIX of Figure 28,
Figure 30 is a section through the gasket of Figure 29 and a cross-section of a corrugated conduit,
Figure 31 is a partial cross-section of the joint according to the invention with a gasket and a corrugated conduit inserted,
Figure 32 is a cross-section of the joint according to the invention, with a variant of the gasket,
Figure 33 is a cross-section of the joint of Figure 32 with a corrugated conduit inserted,
Figure 34 is a side view of the body of the connector for corrugated conduits according to a variant of the invention,
Figure 35 shows the connector body of Figure 34 from above,
Figure 36 is a section through the connector body, taken on the line XXXVI-XXXVI of Figure 34,
Figure 37 is a section through the connector body, taken on the line XXVII-XXVII of Figure 34,
Figure 38 is a partial side view and section taken on the line XVIII-XVIII of Figure 35,
Figure 39 is a side view of a ring nut according to a variant of the invention,
Figure 40 is a front view of the ring nut of Figure 39,
Figure 41 is a section through the ring nut, taken on the line XLI-XLI of Figure 39,
Figure 42 is a partial side view and section of a ring nut, taken on the line XLII-XLII of Figure 40,
Figure 43 is a side view of a ring nut and a body according to a variant of the invention, not assembled,
Figure 44 is a front view of the ring nut and of the body of Figure 43,
Figure 45 is a side view of the ring nut and of the body of Figure 43, assembled,
Figure 46 shows the ring nut and the body of Figure 45 in a side view and in section,
Figure 47 is a side view of a ring nut and of a body according to the invention, in a first operative condition,
Figure 48 is a partial side view and section taken on the line XXXVIII-XXXVIII of Figure 35, of the ring nut and of the body with a corrugated conduit,
Figure 49 is a side view of the connector according to the invention with a corrugated conduit, in a second operative condition,
Figure 50 is a partial side view and section taken on the line XXXVIII-XXXVIII of Figure 35, of the connector with the corrugated conduit of Figure 49,
Figure 51 is a section taken on the line XXXVI-XXXVI of Figure 34, with the corrugated conduit of Figure 49,
Figure 52 is a side view of a connector with a corrugated conduit, in a third operative condition,
Figure 53 is a section through the connector with the corrugated conduit of Figure 52, taken on the line XXXVI-XXXVI of Figure 34,
Figure 54 is a view showing a gasket for a connector according to a variant of the invention, from above,
Figure 55 is a section through a gasket, taken on the line LV-LV of Figure 54,
Figure 56 is a view of the gasket of Figure 55 in a first operative condition,
Figure 57 is a view of the gasket of Figure 55 in a second operative condition,
Figure 58 is a view of a gasket according to a further variant of the invention, from above,
Figure 59 is a section through the gasket of Figure 58, taken on the line LX-LX of Figure 58, and
Figure 60 shows the gasket of Figure 59 in the operative condition.

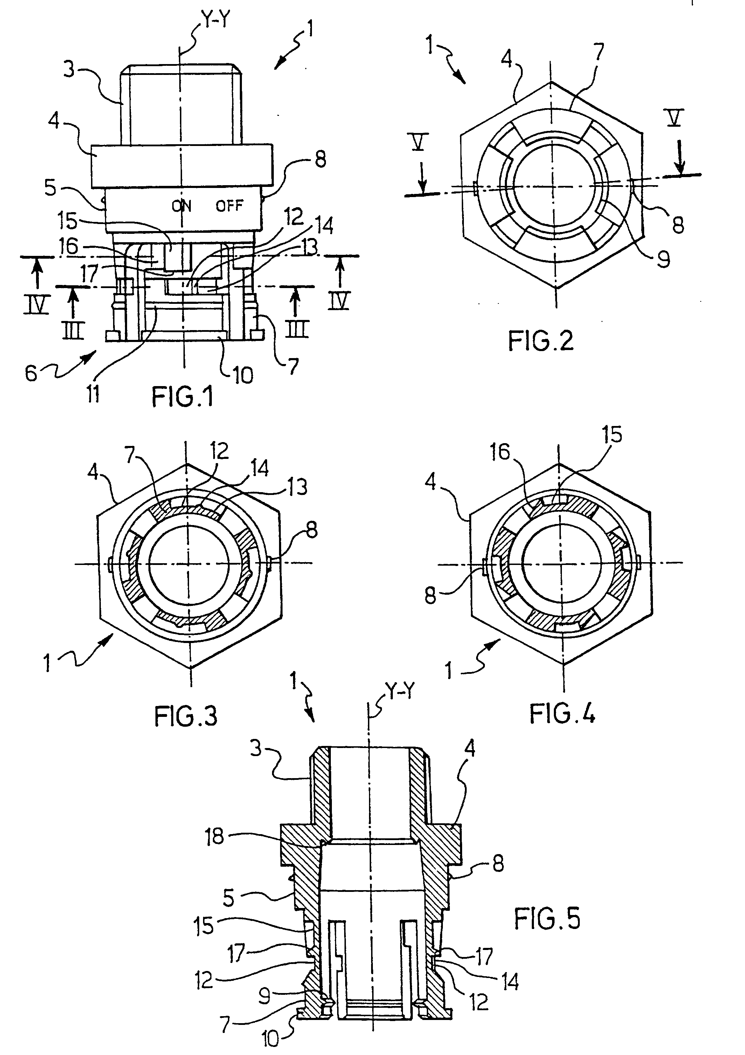

In Figure 1, a connector body according to the present invention is generally indicated 1.

The body 1 has a cylindrical internal cross-section and comprises a first end 3, a first intermediate portion 4, a second intermediate portion 5, and a second end 6 comprising flexible axial extensions 7.

The end 3 may preferably be threaded to allow the body 1 to be screwed onto a corresponding thread which is present, for example, on the body of any apparatus.

The first portion 4 is preferably hexagonal so as to facilitate the fixing of the body 1 to apparatus with the aid of tools.

The second intermediate portion 5 is, for example, generally cylindrical, and bears external stop means 8 for restraining a ring nut in abutment. The stop means 8 are preferably constituted by at least two teeth for mating with corresponding recesses present in a ring nut which can be coupled with the connector body 1.

The second portion 5 also has external visual location marks, for example, wording such as "ON-OFF", the function of which will be explained below.

The flexible axial extensions 7 of the second end 6 extend substantially parallel to and away from the second portion 5. The flexible axial extensions 7 are arranged symmetrically with respect to the axis of the connector and in a manner such that their internal walls are continuous with the internal walls of the second portion 5.

Although, in the embodiment shown, there are four flexible axial extensions 7, this does not constitute a limitation since it is clearly possible to provide a different number of extensions, for example, two extensions.

The head ends of the flexible axial extensions 7 are provided internally with teeth 9 to be fitted in the channels of a corrugated conduit, and externally with a projecting lip 10.

Proceeding from the lip 10 towards the second portion 5, the external wall of each flexible axial extension 7 has a rib 11 arranged transversely relative to the axis of the connector.

After the rib 11, again externally, there are a first recess 12 and a second recess 13 which are disposed along the same line substantially transverse the axis of the connector. Moreover, the first and second recesses 12 and 13 are separated by a projection or catch 14.

The second recess 13 is also open towards one of the slots present between one flexible axial extension 7 and another, as shown in Figure 3.

Each flexible axial extension 7 then has a third recess 15 positioned between the first recess 12 and the second intermediate portion 5 of the body 1 so as to be substantially aligned with the first recess 12.

The third recess 15 is also separated from the first recess 12 by means of a first inclined plane 17 facing towards the third recess 15.

The third recess 15 is also delimited by a second inclined plane 16 arranged so as to form an edge of reduced thickness facing towards the slot on the opposite side of the flexible extension 7 to the slot which is continuous with the second recess 13, as shown in Figure 4.

With reference to Figure 5, a cusp 18 facing towards the second end 6 is preferably formed on the internal wall of the connector body 1 in the vicinity of the connection point between the end 3 and the first intermediate portion 4.

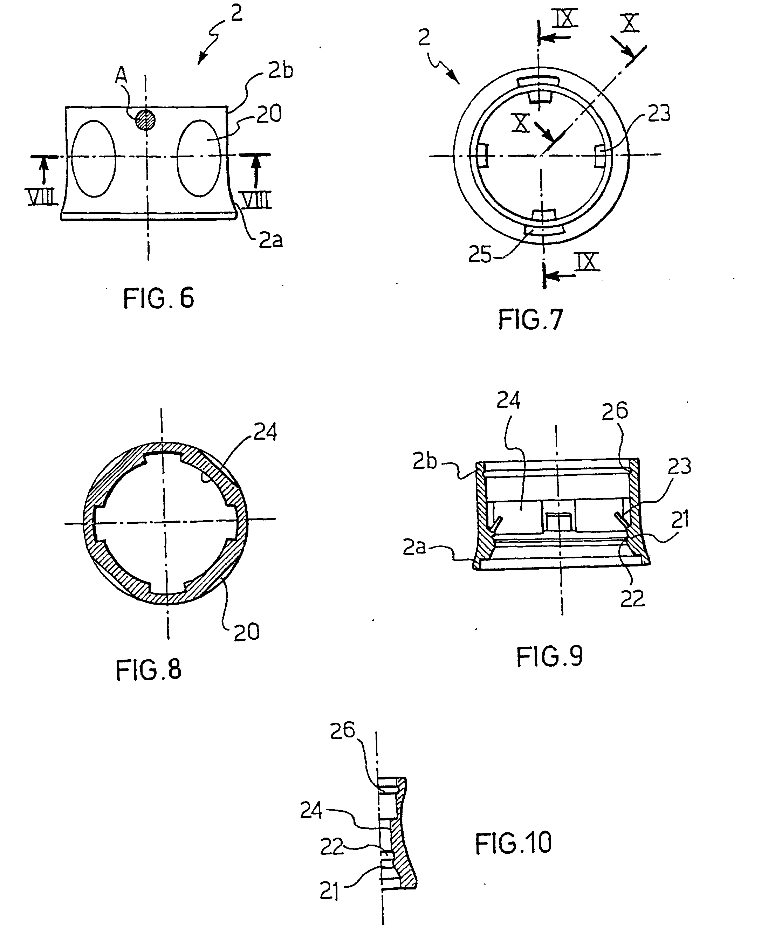

With reference to Figures 6 and 7, a ring nut, generally indicated 2, can be fitted on the connector body 1 so as to be movable axially and rotatable.

The ring nut 2 is an annular band which preferably has a slightly tapered end 2a for facilitating radial outward bending of the flexible axial extensions 7 when the ring nut 2 is fitted on the body 1 so that it abuts the first intermediate portion 4, and an end 2b remote from the end 2a and representing the end by which the ring nut 2 is fitted onto the body 1.

The ring nut 2 preferably has recesses 20 on its outer surface for facilitating gripping with the fingers of one hand during use.

A pointer A is formed at the end 2b for indicating the visual location marks "ON-OFF" on the second intermediate portion 5 of the body 1. The pointer is preferably constituted by a coloured mark.

Internally, the ring nut 2 has a ring 21 positioned at the tapered end 2a, as shown in Figure 9. The ring 21 has a groove 22 for housing the corresponding rib 11 formed on the flexible axial extensions 7.

Proceeding away from the tapered end 2a, the ring 21 bears four flexible tabs 23 which are inclined towards the end 2b, as shown in Figure 9.

Four shoulders 24 extend substantially as far as half way along the length of the ring nut 2 at the bases of the tabs 23 but angularly offset therefrom.

The tabs 23 and the shoulders 24 are arranged facing one another in pairs, as shown in Figure 7 and Figure 8, respectively.

Moreover, with particular reference to Figure 7, two seats 25 are formed in the end wall of the ring nut 2 for the removal of the ring nut 2 from the body 1 with the aid of a tool.

In the vicinity of the end 2b and around the entire internal circumference of the ring nut 2, there is a groove 26 for engagement with the corresponding teeth 8 on the second intermediate portion 5 of the body 1.

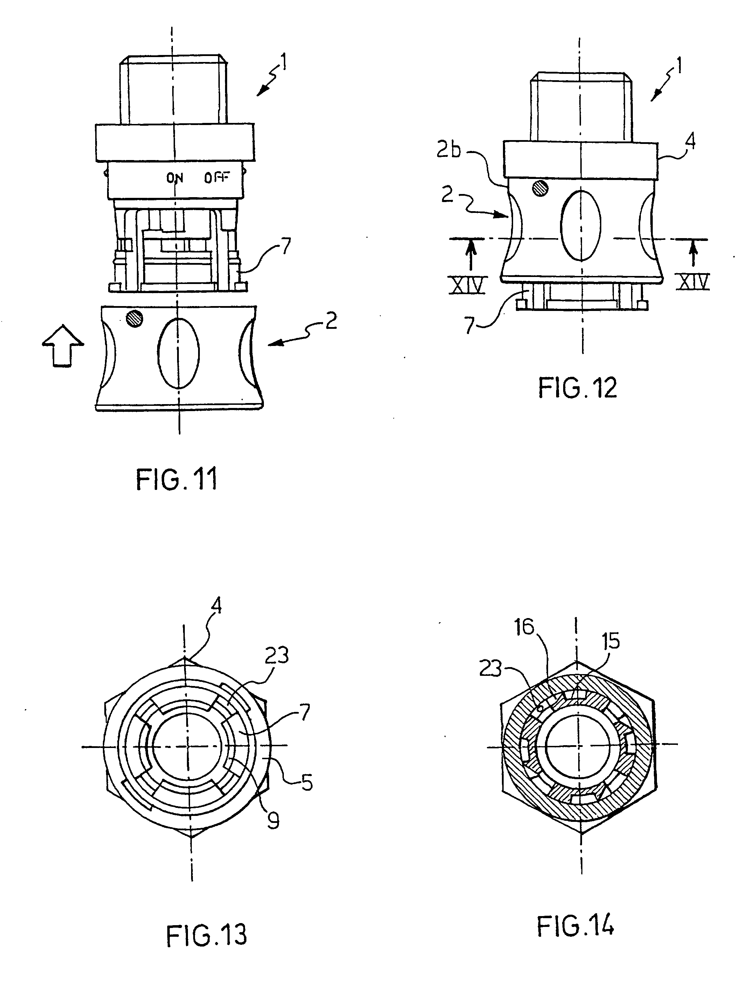

The operation of the connector for corrugated conduits according to the present invention will now be described below with reference to Figures 11 to 31.

Figure 11 shows a body 1 and a ring nut 2 in position for engagement on the body 1. The arrow indicates the direction in which the ring nut 2 is engaged on the body 1 so as to form the connector for corrugated conduits of the invention.

Figure 12 shows the ring nut 2 fully fitted on the body 1 so that its fitting end 2b abuts the first intermediate portion 4 of the body. The ring nut 2 is restrained in this position by virtue of the engagement achieved between the teeth 8 of the second intermediate portion 5 of the body 1 and the groove 26 of the ring nut 2.

Moreover, in this position, the head ends of the flexible axial extensions 7 project from the ring nut 2.

In the view from above shown in Figure 13, it can be seen that the tabs 23 are disposed in the slots between the four flexible axial extensions 7. Moreover, as shown in Figure 14, the tabs 23 are disposed adjacent the second inclined plane 16, in a clockwise direction. The third recess 15 is disposed adjacent the second inclined plane 16 in a clockwise direction.

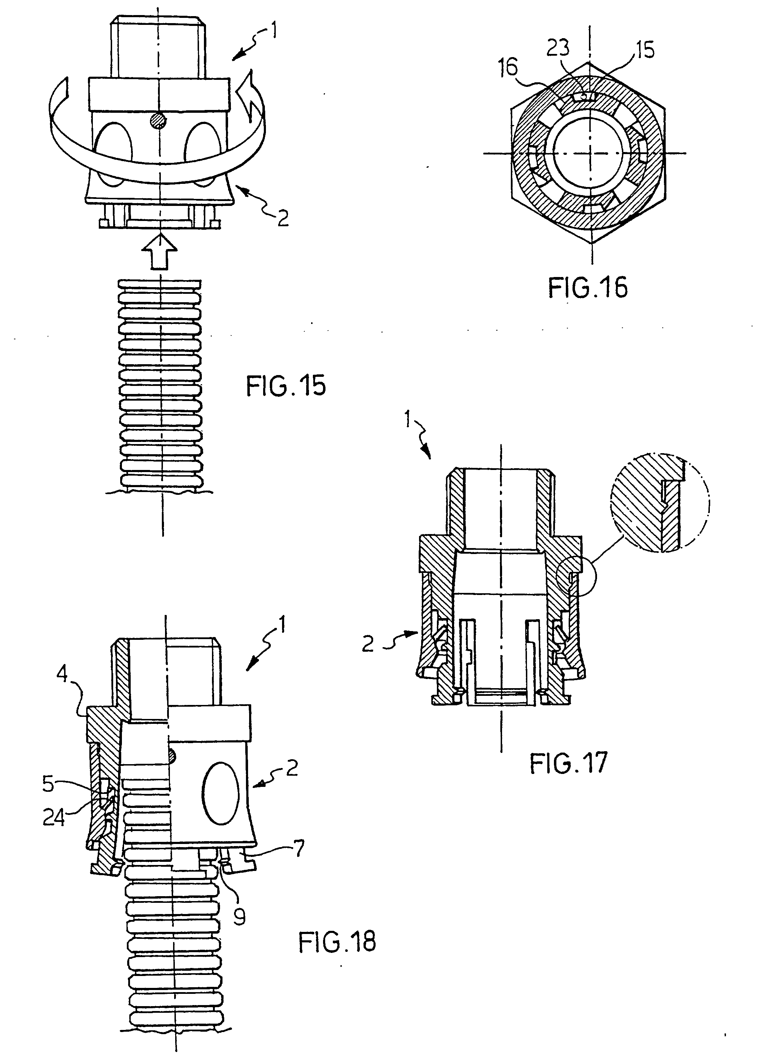

If the ring nut 2 is rotated clockwise as shown in Figure 15, the tabs 23 pass over the second inclined plane 16 and are brought into the third recess 15.

This position, which is shown clearly in Figure 16, represents a preferred state in which the connector for corrugated conduits according to the invention can be sold and, in any case, represents the condition in which the connector is arranged before the insertion of a corrugated conduit.

When the ring nut 2 is in abutment with the first hexagonal portion 4 of the body 1, the shoulder 24 also abuts the second portion 5 and the head portions of the flexible axial extensions 7 carrying the teeth 9 are free to bend outwardly, consequently permitting the insertion of a corrugated conduit, as shown in Figure 18.

Once a corrugated conduit has been inserted in the connector, the ring nut 2 can be pulled axially so that the tabs 23 pass over the inclined plane 17 and are brought into the first recess 12, achieving a snap-engagement. Moreover, the rib 11 of the head ends of the flexible axial extensions 7 will come into engagement with the corresponding groove 22 of the ring nut 2 and the lip 10 of each resilient extension 7 will come into abutment with the ring 21 to prevent the ring nut 2 from slipping off the body 1.

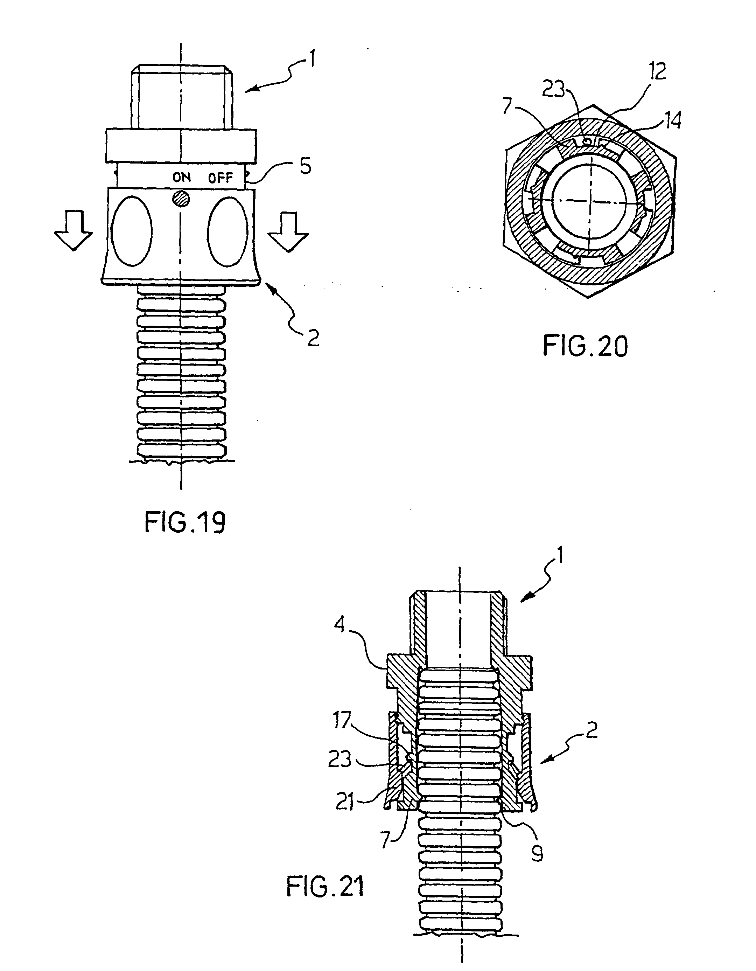

This movement, which is shown in Figure 19, simultaneously performs two functions: the locking of the corrugated conduit in the connector, and the engagement of a security system.

With regard to the locking of the corrugated conduit, it is clear, as is also shown in Figure 21, that the ring 21 is now in contact with the head portions of the flexible axial extensions 7, preventing any movement thereof in a radial direction. As a result, the teeth 9 are forced to remain in the position of engagement in the channels of the corrugated conduit, even after any attempt to remove the corrugated conduit from the connector.

Moreover, the tabs 23 have passed over the first inclined plane 17 and have been brought into the first recess 12 (Figure 21). In this condition, the tabs 23 are prevented from returning to the previous position by the shoulder corresponding to the inclined plane 17 and, consequently, the ring nut 2 cannot be brought back into the position of abutment with the first portion 4 of the body 1.

Moreover, the tabs 23 are also prevented from rotating anticlockwise, even intentionally, by the shoulder corresponding to the first recess 12 and are prevented from rotating clockwise, unintentionally, by the catch 14 (Figure 20).

Clearly, in this situation, a security system has been engaged, preventing accidental release of the ring nut 2 from the body 1.

The security situation described above is advantageously indicated by the visual pointer on the external wall of the ring nut 2 which will be disposed adjacent the reference "ON" of the second intermediate portion 5 of the body 1 (Figure 19).

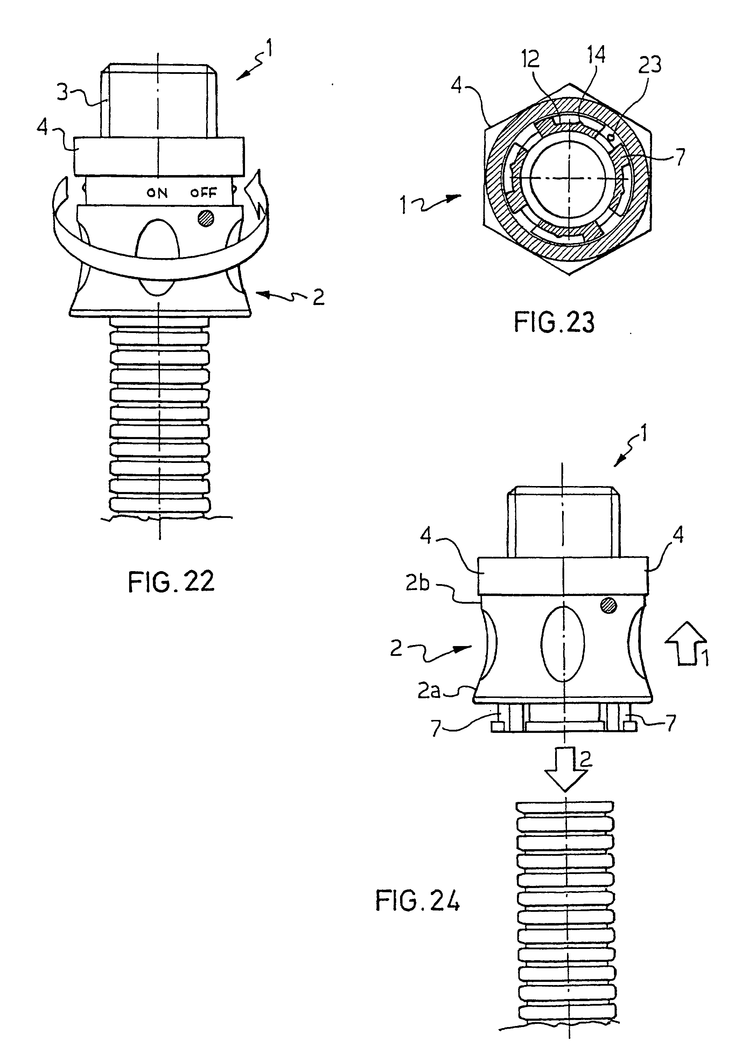

In order to disengage the security device and to release the connector 1, it will suffice to continue the clockwise rotation of the ring nut 2 until the tabs 23 pass over the catch 14, as shown in Figures 22 and 23. At this point, the tabs 23 will be disposed in the slot created between the flexible axial extensions 7 so that it will be possible to push the ring nut 2 against the first portion 4. This enables the heads of the flexible axial extensions 7 to bend radially outwardly again in response to the pulling-out of the corrugated conduit (Figure 24).

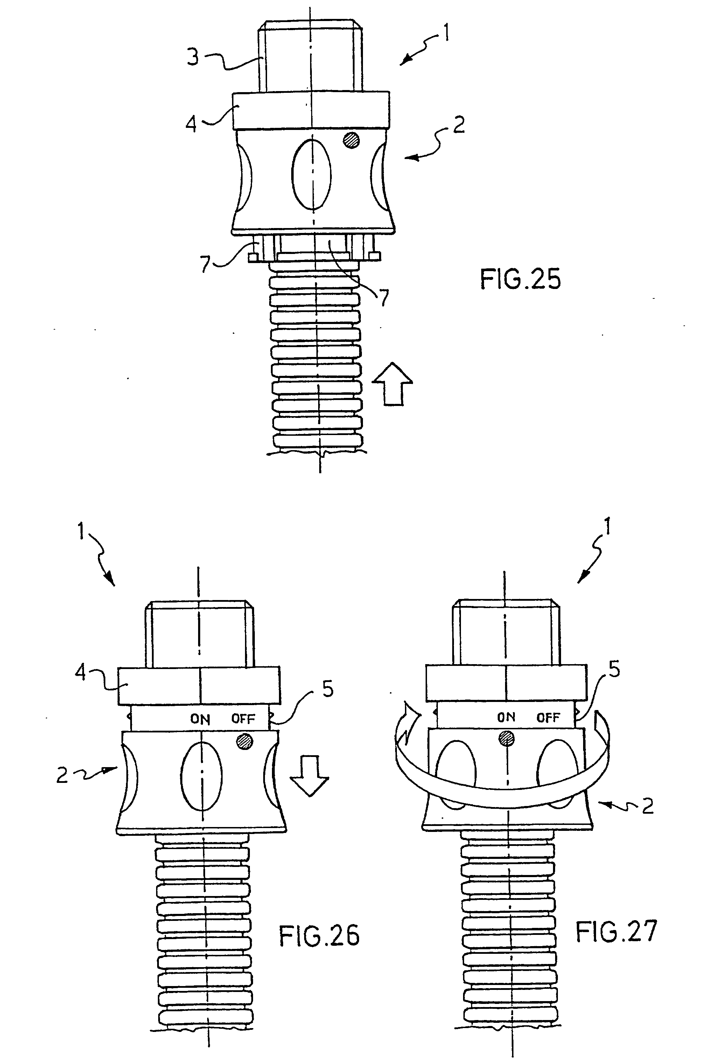

If a corrugated conduit is to be re-engaged and secured, it suffices to insert the conduit in the connector, to pull the ring nut until the ring 21 abuts the lip 10, and to rotate the ring nut 2 anticlockwise as shown by Figures 25 to 27. Naturally, during the anticlockwise rotation, it will be necessary to pass over the obstruction created by the catch 14.

These operations correspond to the reverse of the operations described above with reference to Figures 19, 22 and 24.

The connector for corrugated conduits according to the present invention may include a sleeve-like gasket 27 having a flanged end 28.

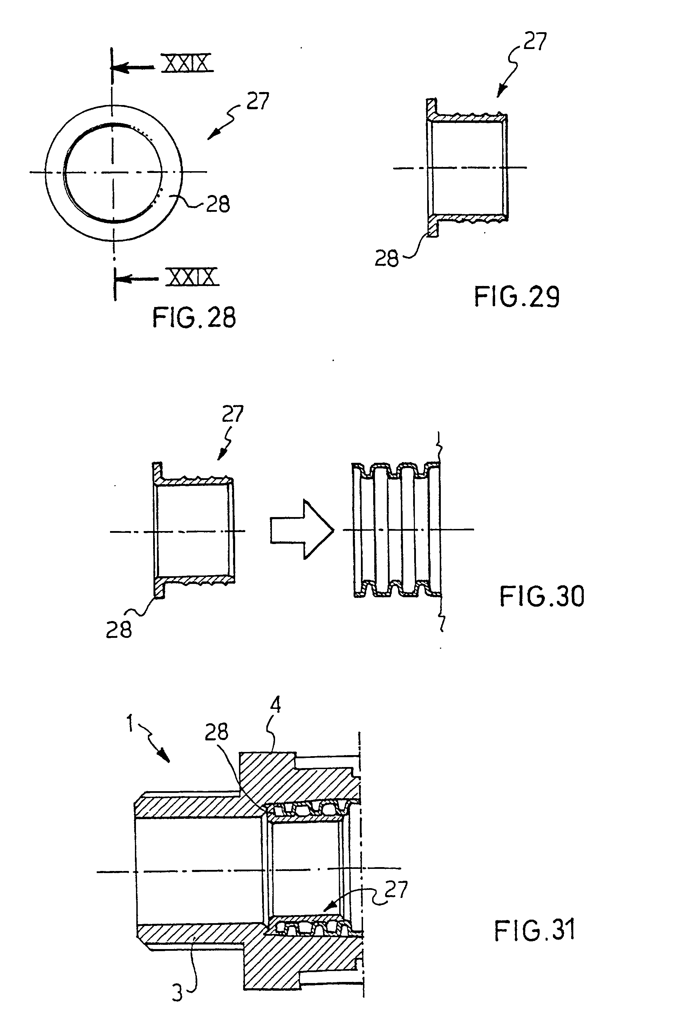

The gasket 27 is fitted flush with the end of the corrugated conduit to be inserted in the connector so that the flanged end 28 abuts the edge of the corrugated conduit (Figure 30). The corrugated conduit is then inserted in the connector and the flanged end 28 is thus compressed against the cusp 18, improving the PI of the connector (Figure 31).

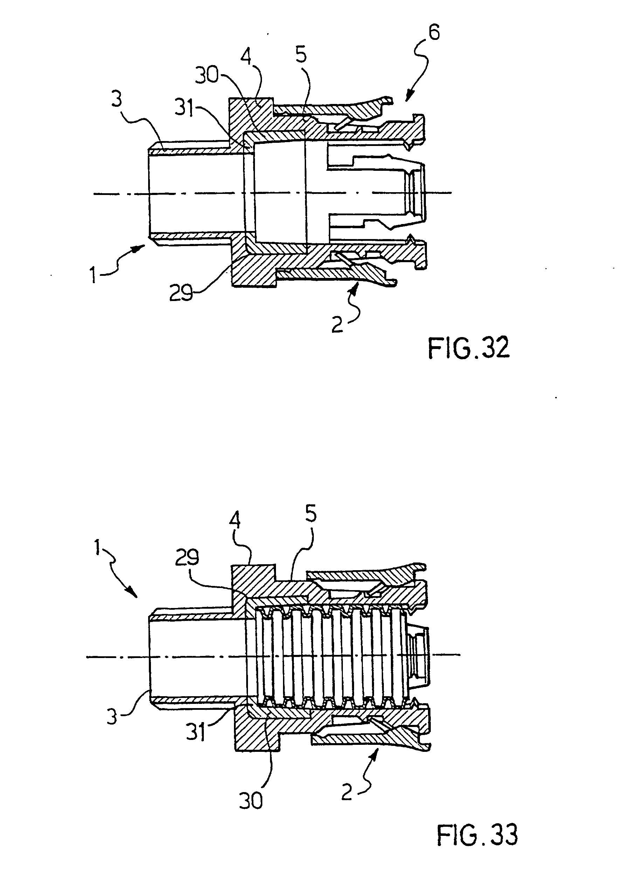

Alternatively, a gasket 29 may be formed integrally with the inside of the connector body 1 in the region of the first intermediate portion 4 and the second intermediate portion 5 (Figures 32 and 33). Moreover, this gasket 29 is advantageously formed by an annular portion 30, the internal wall of which defines a single plane continuous with the internal wall of the second end 6, and by an annular rim 31 facing inwardly relative to the gasket so as to terminate in the plane identified by the internal wall of the end 3.

The gasket 29 will preferably be formed by over-moulding or co-injection.

It is clear from the description given above that the connector for corrugated conduits is extremely easy to use since it does not require the use of two hands, the use of a single hand being sufficient. This is particularly useful if the connector has to be fitted, for example, on parts of machines which are difficult to reach.

Moreover, the connector has a security system which is easy to use but, at the same time, is effective against unintentional release.

Moreover, the connector according to the present invention advantageously has no external openings, thus preventing problems connected with infiltration of dirt and liquids which could cause malfunctioning of the connector and/or of the electrical cables housed therein.

Furthermore, the connector can be removed from the site of use with the use of tools, by means of the first intermediate portion 4 which has a hexagonal outer shape.

Moreover, the security system can also be removed with the aid of tools acting at the level of the seats 25.

It should be noted that the connector is free of any axial movement when the corrugated conduit is inserted; this results in greater strength, compactness and reliability of the PI leaktightness of the connector.

In addition, the ergonomic grip present on the outer wall of the ring nut further facilitates the operation of the connector by means of the thumb and the index finger of one hand alone.

The connector for corrugated conduits according to the present invention has been designed and produced to conform to European Norm EN 50086 which regulates the basic requirements for systems and accessories for electrical installations.

In particular, the material used to produce the connector is halogen- and cadmium-free, self-extinguishing PA 66, and the degree of leaktightness without the gasket is PI66 and with the gasket is PI67.

Many variations may be applied to the connector for corrugated conduits of the invention, for example, the positions and sizes of the various components of the connector, as well as their shapes, may be varied.

In particular, the tabs 23 may be provided on the body 1 instead of on the ring nut 2, whilst the recesses 12, 13 and 15 and the inclined planes 16 and 17 will consequently be formed on the internal wall of the ring nut 2 which, in addition, will have to have material voids corresponding to the above-described slots between the flexible axial extensions 7.

Moreover, the number of tabs 23 and shoulders 24 may vary, for example, there may be two instead of four.

The stop means 8 and 26 may alternatively be constituted by a ring which projects around the entire external circumference of the second cylindrical portion 5 and which is coupled with a corresponding recess created around the circumference of the internal wall of the ring nut 2.

The number of flexible axial extensions 7 may vary according to requirements and/or preferences.

Similarly, the method of forming the visual "ON-OFF" location mark on the second intermediate portion 5 and the corresponding pointer A on the ring nut 2 may consist of wording and corresponding coloured pointers other than those used in the embodiment shown in the drawings appended hereto.

The materials usable to construct the connector may also vary according to specific requirements or preferences.

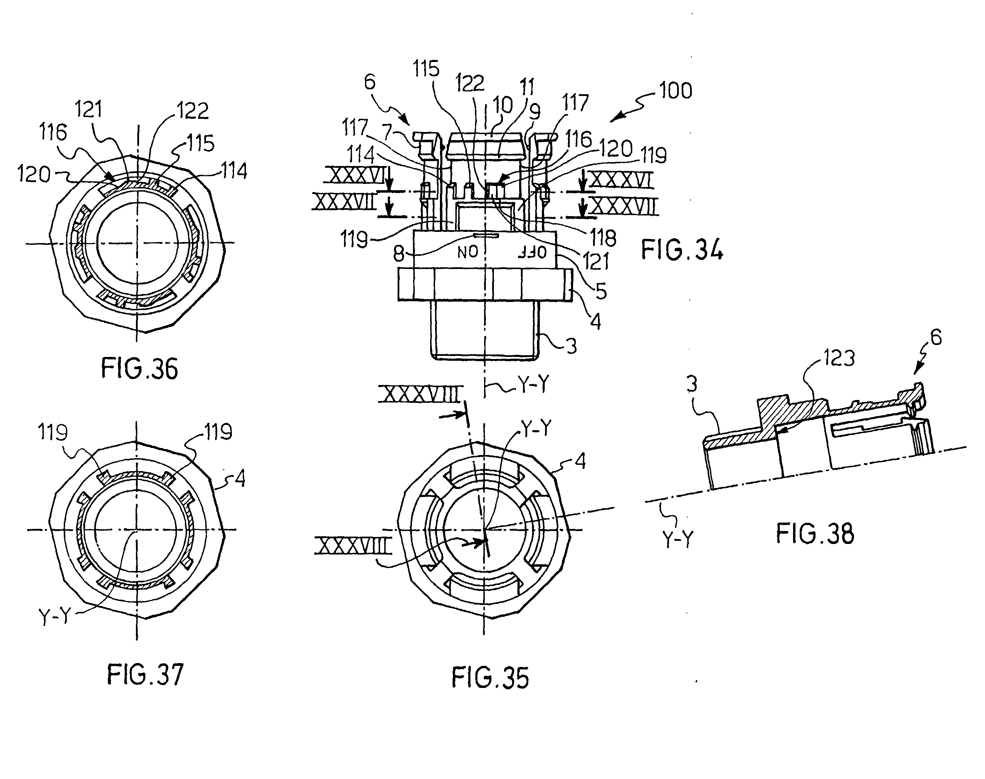

A variant of the invention will now be described with reference to Figures 34 to 60.

Parts in common with the above-described embodiment are indicated by the same reference numerals and will not be described further here.

In Figure 34, the body 100 of a connector according to the variant is generally similar in shape to the body 1 shown in Figure 1.

In particular, the body 100 comprises a first end 3, a first intermediate portion 4, a second intermediate portion 5, and a second end 6 comprising flexible axial extensions 7 having two substantially parallel axial edges 117.

The first portion 4 differs slightly from the first portion of the body 1 of Figure 1 since it preferably has a polygonal shape comprising longer sides alternating with shorter sides.

The flexible axial extensions 7 of the second end 6 are substantially identical in shape to the flexible axial extensions of the embodiment of Figure 1.

In particular, on the outer wall of each flexible axial extension 7, proceeding from the rib 11 towards the second portion 5, there are three projections 114, 115 and 116 arranged along the axis Y-Y of the connector body 100.

The first projection 114 is positioned substantially in the vicinity of one of the two axial edges 117 of a flexible axial extension 7. The second projection 116, on the other hand, is positioned in the vicinity of the centre of the same flexible axial extension. Finally, the third projection 115 is positioned substantially equidistantly between the projections 114 and 116.

As shown in Figure 36, it should be noted that the first projection 116 is preferably of a less accentuated cylindrical shape than the corresponding second and third projections 114 and 115. In particular, moving clockwise from one slot of a flexible axial extension 7 to another, the first projection 116 has a lead-in ramp 120, a substantially flat top 121, and a sufficiently steep wall 122. The term "sufficiently steep" will be defined in the following description of the operation of the connector of the invention.

Moreover, these same first, third and second projections 114, 115 and 116 extend, from a predetermined distance from the rib 11, towards the second intermediate portion 5, to meet a transverse projection 118. This transverse projection 118 extends throughout the transverse extent of the flexible axial extension 7 from one axial edge 117 to the other axial edge 117.

Still proceeding towards the second intermediate end 5, a rib 119 extends in an axial direction from the transverse projection 118 and in the vicinity of each of the axial edges 117, as far as the second intermediate end 5 (Figures 34 and 37).

Figure 38 is a partial section taken on the line XXXVIII-XXXVIII of Figure 34, in which the inner wall of the body 100 in the vicinity of the first end 3 becomes narrower, creating a shoulder 123.

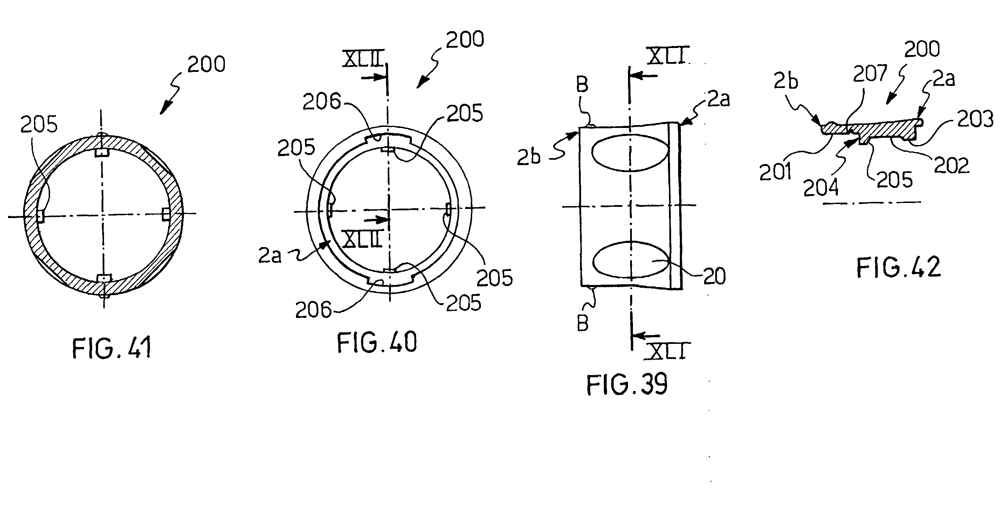

With reference to Figures 39 to 42, a ring nut which can be fitted on the connector body 100 so as to be movable axially and rotationally, is generally indicated 200.

The ring nut 200 has an outer shape substantially the same as the outer shape of the ring nut 2 described with reference to Figure 6 and parts in common with the ring nut 2 are therefore indicated by the same reference numerals and will not be described further.

It should in any case be noted that the ring nut 200 has two opposed pointers B, in relief, for indicating the visual "ON-OFF" location marks present on the connector body 100. The pointers in fact correspond to the pointer A of Figure 6.

Internally, the ring nut 200 has a first annular band 201 positioned in the region of the end 2b and a second annular band 202 positioned in the region of the end 2a, as shown in Figure 42.

The first annular band 201 has a groove 207.

The second annular band 202 has a greater thickness in section than the first annular band 201 and is defined in the vicinity of the end 2a by a thickened outer annular rim 203. The second annular band 202 also adjoins the first annular band 201 by means of an inner annular rim 204 having a series of teeth 205 distributed around its circumference.

Preferably, there are four of these teeth 205 and they are diametrally opposed, as shown in Figure 40.

With particular reference to Figure 40, two seats 206 are formed in the vicinity of the end 2a, for the removal of the ring nut 200 from the body 100 with the aid of a tool.

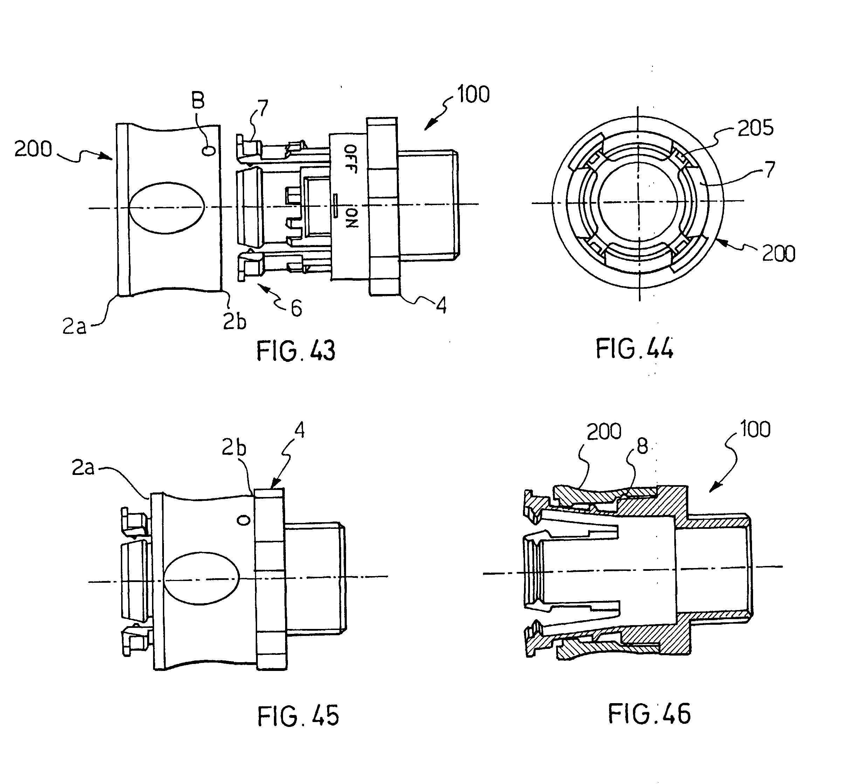

The operation of the connector for corrugated conduits according to this variant of the invention will now be described with reference to Figures 43 to 54.

Figure 43 shows a body 100 and a ring nut 200 positioned for engagement on the body 100.

In particular, the ring nut 200 is fitted on the body 100 with one pointer B aligned with the "OFF" mark. Moreover, as shown in Figure 44, the teeth 205 are disposed in the regions of the slots between the flexible axial extensions 7.

Figure 45 shows the ring nut 200 fully fitted on the body 100 in a manner such that its fitting end 2b abuts the first intermediate portion 4 of the body. The ring nut 200 is held in this position by virtue of the engagement achieved between the teeth 8 of the second intermediate portion 5 of the body 1 and the groove 207 of the ring nut 200.

Moreover, in this position, the head ends of the flexible axial extensions 7 project from the ring nut 200.

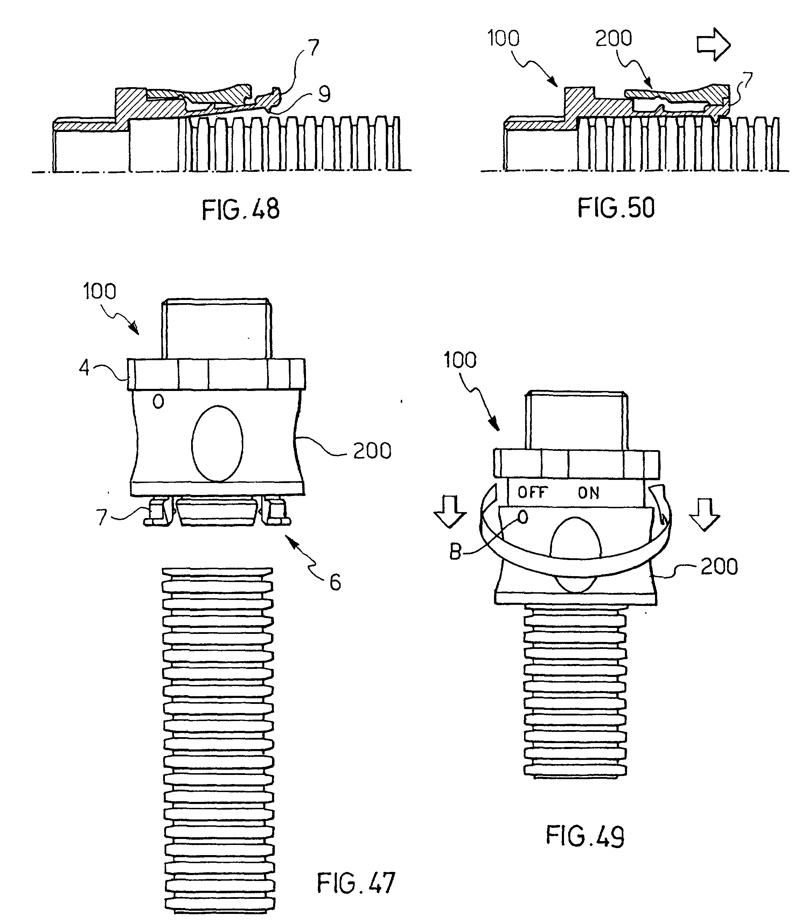

The connector for corrugated conduits is thus arranged for sale and/or use. Figure 47 shows the connector with a corrugated conduit approaching from the end at which the head ends of the axial extensions 7 are disposed.

Figure 48 shows a corrugated conduit inserted in the connector of the invention. As can be seen, by virtue of the flexibility of the flexible axial extensions 7 and of the particular tapered shape of the ring nut 200 which allows them to extend radially, the corrugated conduit can easily be inserted without the teeth 9 of the flexible axial extensions interfering with the channels of the corrugated conduit.

Once the corrugated conduit is inserted, the ring nut 200 is pulled axially until the outer annular rim 203 abuts the lip 10 of each flexible extension 7, as shown in Figures 49 and 50.

In this position, the ring nut 200 is prevented from slipping off the body 100 and, at the same time, the ring nut holds the flexible axial extensions 7 in a position such that the teeth 9 are engaged in a channel of the corrugated conduit, as already described fully above.

Moreover, the pointer B is still in the region of the "OFF" wording (Figure 49).

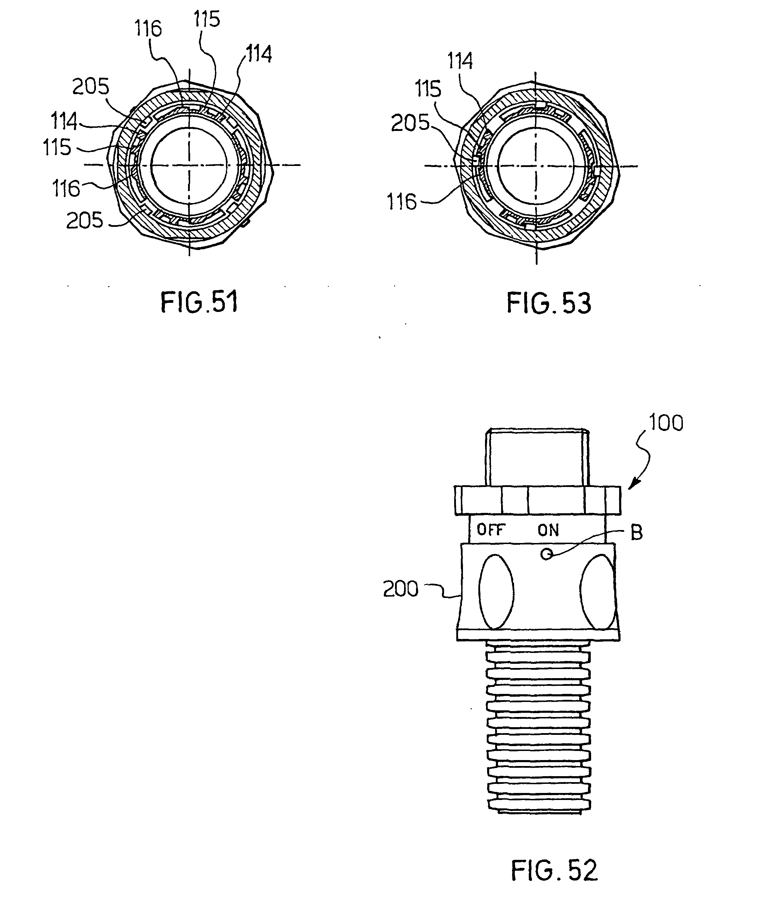

At this point, as shown in Figure 52, the ring nut 200 can be rotated clockwise until the pointer B is in the region of the "ON" wording.

This movement brings the teeth 205 from the slots between the flexible axial extensions 7, as shown in Figure 51, over the flexible axial extensions, passing first of all over the lead-in ramp 120 and then over the top 121 of the projection 116, and finally being positioned between this projection 116 and the projection 115, as shown in Figure 53.

In particular, the projection 115 forms a stop which the tooth 205 abuts, preventing further clockwise rotation of the ring nut 200. The wall 122, however, is sufficiently steep to constitute a stop for preventing accidental rotation of the ring-nut in an anticlockwise direction but, at the same time, nevertheless permits anticlockwise rotation as a result of the application of a predetermined force enabling the stop to be passed over.

In other words, the projection 116 constitutes a stop element which can easily be passed over by the tooth 205 as a result of a clockwise rotation of the ring nut 200 but which can be passed over with difficulty by the tooth, only by the application of a predetermined force, as a result of anticlockwise rotation of the ring nut.

Moreover, the ring nut 200 cannot be returned to the position of abutment against the first portion 4 of the body 100 by an axial movement, since the tooth 205 is also in abutment against the transverse projection 118 of the body 100.

It is clear from the foregoing description that the connector for corrugated conduits according to this variant of the invention is provided with security means for preventing accidental release of a corrugated conduit.

As stated above, the secure state is advantageously indicated by the visual pointer present on the outer wall of the ring nut 200 which will be disposed in the region of the "ON" mark of the second intermediate portion 5 of the body 100 (Figure 52).

In order to disengage the security means and to release the connector it will suffice to rotate the ring nut 200 anticlockwise, applying sufficient force for the tooth 205 of the ring nut to pass over the wall 122 of the projection 116 of the body 100 and to return into the slot between two flexible axial extensions 7.

As a result, the ring nut 200 will move axially into abutment with the first intermediate portion 4 of the body 100 and, as explained above, the flexible axial extensions 7 will be able to bend radially outwardly relative to the body 100 to enable their teeth to be released from engagement with the channels of the corrugated conduit.

Clearly, the particular embodiment just described further improves the connector for corrugated conduits according to the present invention, simplifying the structure of the flexible axial extensions 7. In addition, the teeth 205 are stronger than the tabs 23 described with reference to the previous embodiment precisely in the situation in which it is necessary to use a stronger structure. Finally, the operations for the preparation and the locking-release of the connector, as well as for the engagement-disengagement of the security means, are further simplified.

Moreover, it is advantageously possible to provide solely the projections 116 and 114 on the outer surface of each flexible axial extension 7 of the body 100.

In this case, as well as simplifying the structure of the connector body 100, the elimination of the projection 115 also reduces the weight of the structure with the result of achieving greater resilience of the flexible axial extensions 7, which greater resilience may be dictated by particular conditions of use.

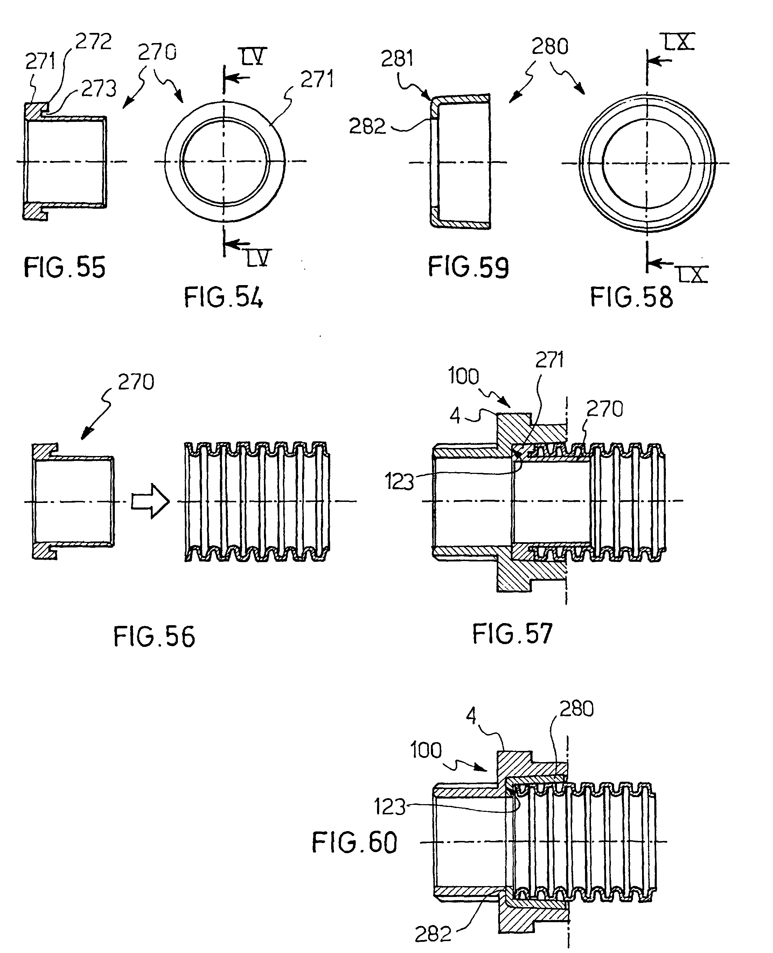

The connector for corrugated conduits according to the present invention may include a sleeve-like gasket 270 having a flanged end 271, as shown in Figures 54 and 55.

Preferably, an annular extension 272 extends from the flanged end 271, facing away from the flanged end so as to form a seat 273.

When the gasket 270 is fitted in a corrugated conduit such as that shown in Figure 56, its seat 273 can house the base wall of a channel of the corrugated conduit so as to improve the sealing of the gasket against the corrugated conduit. At this point, the corrugated conduit can be inserted inside the connector body 100 so that the flange 271 abuts the shoulder 123 of the inner wall of the body 100.

Alternatively, it is possible to provide a gasket 280 formed by a sleeve having one end 281 provided with an annular rim 282 facing towards the inside of the gasket so as to form a ledge which abuts the shoulder 123 of the body 100, as shown in Figures 58 and 59.

A gasket 280 of this type is inserted in the connector body 100 with the outer surface of the annular rim 282 in abutment with the step 123 in the internal wall of the body (Figure 60).

As can be appreciated from the description, the connector for corrugated conduits according to the invention satisfies the requirements referred to in the introductory part of the present description and at the same time overcomes the disadvantages of the connectors for corrugated conduits of the prior art.

The present invention in fact provides a connector for corrugated conduits which is simple, practical and secure.

Naturally, in order to satisfy contingent and specific requirements, an expert in the art may apply to the above-described connector for corrugated conduits many modifications and variations all of which, however, are included in the scope of the invention as defined by the appended claims.

## Claims

1. A connector for corrugated conduits, comprising a body (1; 100) which can house a corrugated conduit by being fitted thereon, and which has engagement means (7) which can be fitted in channels of the corrugated conduit and can be operated in order to restrain the corrugated conduit in the body (1; 100), said connector comprising a ring nut (2; 200) which is movable on the body (1; 100) and which, in a first operative condition, leaves the engagement means (7) free to be disengaged from the channels of the corrugated conduit and, in a second operative condition, keeps the engagement means (7) fitted in the channels, **characterized in that** said connector comprises security means (12, 23, 114, 116, 204) for locking the ring nut (2;200) in the second operative condition and said security locking means can be snap-activated by rotation of the ring nut (2;200) on the body (1; 100).

2. A connector for corrugated conduits according to Claim 1, in which the security locking means (12, 23; 114, 116, 204) are releasable.

3. A connector for corrugated conduits according to Claim 1 or Claim 2, in which the security locking means comprise a first recess (12) and a respective tab (23) for snap-engagement in the recess (12).

4. A connector for corrugated conduits according to Claim 3, when it is dependent on Claim 2, comprising a catch (14) which is associated with the recess (12) and over which the tab (23) can pass when the ring nut (2) is rotated in order to release the security locking means (12, 14, 23) of the ring nut (2).

5. A connector for corrugated conduits according to Claims 1 or 2, in which the security locking means comprise a first projection (116), a second projection (114), and a tooth (205) for snap-engaging between the first projection (116) and the second projection (114).

6. A connector for corrugated conduits according to Claim 5, in which the projection (115) constitutes a stop which can easily be passed over by the tooth (205) as a result of a clockwise rotation of the ring nut (200) and which can be passed over with difficulty as a result of an anticlockwise rotation of the ring nut (200).

7. A connector for corrugated conduits according to Claim 5 or Claim 6, comprising a third projection (115) positioned between the first projection (116) and the second projection (114), the tooth (205) snap-engaging between the first projection (116) and the third projection (115).

8. A connector for corrugated conduits according to any one of Claims 4 to 7, in which the body (1; 100) has an cylindrical internal cross-section and comprises a first end (3) and a second end (6), the second end comprising at least two flexible axial extensions (7).

9. A connector for corrugated conduits according to Claim 8, in which the first end (3) is threaded.

10. A connector for corrugated conduits according to Claim 8 or Claim 9, in which the body (1; 100) comprises an externally polygonal, first intermediate portion (4) between the first end (3) and the second end (6).

11. A connector for corrugated conduits according to Claim 10, in which the body (1; 100) comprises a cylindrical, second intermediate portion (5) between the first intermediate portion (4) and the second end (6).

12. A connector for corrugated conduits according to Claim 11, comprising a gasket (29) formed by an annular portion (30) the internal wall of which defines a single plane continuous with the internal wall of the second end (6), and by an annular rim (31) facing inwardly relative to the gasket so as to terminate in the plane defined by the internal wall of the end (3).

13. A connector for corrugated conduits according to Claim 10 or Claim 11, in which a cusp (18) facing towards the second end (6) is formed on the internal wall of the body (1) in the vicinity of the connection point between the first end (3) and the first intermediate portion (4).

14. A connector for corrugated conduits according to Claim 13, comprising a gasket (27) having a flanged end for engagement with the cusp (18).

15. A connector for corrugated conduits according to any one of Claims 8 to 14, in which each of the flexible axial extensions (7) has a first recess (12) and the ring nut (2) bears internally at least two tabs (23) each of which can snap-engage in a respective first recess (12).

16. A connector for corrugated conduits according to Claim 15, in which each flexible axial extension (7) has a second recess (13), substantially aligned with the first recess (12) transversely relative to the axis of the connector and separated from the first recess (12) by the catch (14), the second recess (13) opening into an adjacent slot between the flexible axial extensions (7).

17. A connector for corrugated conduits according to Claim 16, comprising, on each flexible axial extension (7), a third recess (15) positioned between the first recess (12) and the second intermediate portion (5) substantially in alignment with the first recess (12) along the axis of the connector, the third recess (15) being separated from the first recess (12) by means of a first inclined plane (17) facing towards the third recess (15) and a second inclined plane (16) adjacent the third recess (15) and facing so as to form an edge the thickness of which is reduced towards the slot on the opposite side of the flexible axial extension (7) to the slot adjacent the second recess (13).

18. A connector for corrugated conduits according to Claim 5 or Claim 6, in which the engagement means comprise at least two flexible axial extensions (7), each of the flexible axial extensions (7) carrying a first projection (116) and a second projection (114), and in which the ring nut (200) carries internally at least two teeth (205) each of which can snap-engage between the first projection (116) and the second projection (114).

19. A connector for corrugated conduits according to Claim 7, in which each of the flexible axial extensions (7) carries the third projection (115) positioned between the first projection (116) and the second projection (114).

20. A connector for corrugated conduits according to Claim 18 or Claim 19, comprising a sleeve-shaped gasket (270; 280) having an end (271; 281) which can engage the end of a corrugated conduit.

21. A connector for corrugated conduits according to Claim 20, in which the end (271) of the gasket (270) is flanged and comprises an extension (272) creating a seat (273) for housing a base wall of a channel of the corrugated conduit.

22. A connector for corrugated conduits according to Claim 20, in which the end (281) of the gasket (280) comprises an annular rim (282) facing towards the interior of the gasket (280) so as to form a ledge which is coupled with a shoulder (123) of the internal wall of the body (100).

23. A connector for corrugated conduits according to any one of Claims 10 to 17, comprising stop means (8, 26; 8, 207) for restraining the ring nut (2; 200) in abutment with the first intermediate portion (4) of the body (1; 100).

24. A connector for corrugated conduits according to Claim 23, in which the stop means (8, 26; 8, 207) comprise at least two teeth (8) positioned on the external wall of the second intermediate portion (5) and respective recesses (26; 207) in the internal wall of the ring nut (2; 200) for housing the teeth (8).

25. A connector for corrugated conduits according to any one of Claims 8 to 24, in which the head ends of the flexible axial extensions (7) comprise engagement teeth (9) for insertion in the channels of a corrugated conduit, and an outwardly-projecting lip (10) for restraining the ring nut (2; 200) from slipping off the body (1; 100).

26. A connector for corrugated conduits according to any one of Claims 8 to 25, in which the ring nut (2; 200) has an end (2b) for fitting on the body (1; 100) and an end (2a) which is slightly tapered to facilitate the radial bending of the flexible axial extensions (7).

27. A connector for corrugated conduits according to Claim 26, in which the second intermediate portion (5) bears an external location mark (ON-OFF) and the ring nut (2; 200) bears, on the outside of the end (2b), a pointer (A, B) for cooperating with the location mark to identify the operative condition of the ring nut.

28. A connector for corrugated conduits according to any one of Claims 1 to 27, in which the ring nut (2; 200) has external recesses (20) for facilitating gripping with the fingers of one hand.

29. A connector for corrugated conduits according to any one of Claims 1 to 28, in which the ring nut (2; 200) has, on its end wall, at least two seats (25; 206) for its removal from the body (1; 100) by means of tools.

30. A connector for corrugated conduits according to any one of Claims 26 to 29, in which the portion (2a) of the ring nut (2) has, on its internal wall, at least two thickened regions (24) for ensuring better resistance to disengagement of the teeth (9) from the channels of the corrugated conduit when the ring nut is in the second operative condition.

## Patentansprüche

1. Verbinder für gewellte Rohre, umfassend einen Körper (1; 100), der ein gewelltes Rohr aufnehmen kann, indem er darauf aufgesteckt wird, und welcher Eingriffseinrichtungen (7) aufweist, die in Kanäle des gewellten Rohrs eingreifen können und betätigt werden können, um das gewellte Rohr im Körper (1; 100) zurückzuhalten, wobei der Verbinder eine Ringmutter (2; 200) umfasst, die auf dem Körper (1; 100) beweglich ist und welche die Eingriffseinrichtungen (7) in einem ersten Betriebszustand frei lässt, so dass diese nicht in Eingriff mit den Kanälen des gewellten Rohrs sind und die Eingriffseinrichtungen (7) in einem zweiten Betriebszustand in den Kanälen eingreifend hält, **dadurch gekennzeichnet, dass** der Verbinder Sicherheitseinrichtungen (12, 23; 114, 116, 204) zum Feststellen der Ringmutter (2; 200) in dem zweiten Betriebszustand umfasst und die Sicherheitsfeststelleinrichtungen durch Drehung der Ringmutter (2; 200) auf dem Körper (1; 100) eingerastet werden können.

2. Verbinder für gewellte Rohre nach Anspruch 1, in welchem die Sicherheitsfeststelleinrichtungen (12, 23; 114, 116, 204) lösbar sind.

3. Verbinder für gewellte Rohre nach Anspruch 1 oder Anspruch 2, in welchem die Sicherheitsfeststelleinrichtungen eine erste Vertiefung (12) und einen entsprechenden Vorsprung (23) zum einrastenden Eingriff in die Vertiefung (12) umfasst.

4. Verbinder für gewellte Rohre nach Anspruch 3, wenn dieser von Anspruch 2 abhängig ist, umfassend eine Nase (14), die der Vertiefung (12) zugeordnet ist und über welche der Vorsprung (23) hinweggehen kann, wenn die Ringmutter (2) gedreht wird, um die Sicherheitsfeststelleinrichtungen (12, 14, 23) der Ringmutter (2) zu lösen.

5. Verbinder für gewellte Rohre nach Anspruch 1 oder 2, in welchem die Sicherheitsfeststelleinrichtungen einen ersten Vorsprung (116), einen zweiten Vorsprung (114) und einen Zahn (205) zum einrastenden Eingriff zwischen dem ersten Vorsprung (116) und dem zweiten Vorsprung (114) umfassen.

6. Verbinder für gewellte Rohre nach Anspruch 5, in welchem der Vorsprung (115) einen Anschlag darstellt, der aufgrund einer Drehung der Ringmutter (200) im Uhrzeigersinn leicht von dem Zahn (205) übergangen werden kann und der aufgrund einer Drehung der Ringmutter (200) gegen den Uhrzeigersinn mit Schwierigkeit übergangen werden kann.

7. Verbinder für gewellte Rohre nach Anspruch 5 oder Anspruch 6, umfassend einen dritten Vorsprung (115), der zwischen dem ersten Vorsprung (116) und dem zweiten Vorsprung (114) angeordnet ist, wobei der Zahn (205) zwischen dem ersten Vorsprung (116) und dem dritten Vorsprung (115) einrastet.

8. Verbinder für gewellte Rohre nach einem der Ansprüche 4 bis 7, in welchem der Körper (1; 100) einen zylindrischen Innenquerschnitt aufweist und ein erstes Ende (3) und ein zweites Ende (6) aufweist, wobei das zweite Ende zumindest zwei elastische axiale Verlängerungen (7) umfasst.

9. Verbinder für gewellte Rohre nach Anspruch 8, in welchem das erste Ende (3) mit einem Gewinde versehen ist.

10. Verbinder für gewellte Rohre nach Anspruch 8 oder Anspruch 9, in welchem der Körper (1; 100) einen außen polygonalen ersten Zwischenbereich (4) zwischen dem ersten Ende (3) und dem zweiten Ende (6) umfasst.

11. Verbinder für gewellte Rohre nach Anspruch 10, in welchem der Körper (1; 100) einen zylindrischen zweiten Zwischenbereich (5) zwischen dem ersten Zwischenbereich (4) und dem zweiten Ende (6) umfasst.

12. Verbinder für gewellte Rohre nach Anspruch 11, umfassend eine Dichtung (29), die von einem ringförmigen Bereich (30), dessen Innenwand eine einzelne mit der Innenwand des zweiten Endes (6) durchgängige Ebene definiert, und von einem ringförmigen Rand (31) gebildet wird, der in Bezug auf die Dichtung nach innen weist, um so in der Ebene zu enden, die durch die Innenwand des Endes (3) definiert ist.

13. Verbinder für gewellte Rohre nach Anspruch 10 oder Anspruch 11, in welchem eine Spitze (18), die in Richtung zum zweiten Ende (6) weist, auf der Innenwand des Körpers (1) in der Nähe des Verbindungspunktes zwischen dem ersten Ende (3) und dem ersten Zwischenbereich (4) ausgebildet ist.

14. Verbinder für gewellte Rohre nach Anspruch 13, umfassend eine Dichtung (27) mit einem umgebördelten Ende zum Eingriff mit der Spitze (18).

15. Verbinder für gewellte Rohre nach einem der Ansprüche 8 bis 14, in welchem jede der elastischen axialen Verlängerungen (7) eine erste Vertiefung (12) aufweist und die Ringmutter (2) innen zumindest zwei Vorsprünge (23) aufweist, von denen jeder in eine jeweilige erste Vertiefung (12) einrasten kann.

16. Verbinder für gewellte Rohre nach Anspruch 15, in welchem jede elastische axiale Verlängerung (7) eine zweite Vertiefung (13) aufweist, die im Wesentlichen mit der ersten Vertiefung (12) quer in Bezug auf die Achse des Verbinders ausgerichtet ist und von der ersten Vertiefung durch die Nase (14) getrennt ist, wobei sich die zweite Vertiefung (13) in einen angrenzenden Schlitz zwischen den elastischen axialen Verlängerungen (7) öffnet.

17. Verbinder für gewellte Rohre nach Anspruch 16, umfassend, auf jeder elastischen axialen Verlängerung (7), eine dritte Vertiefung (15), die zwischen der ersten Vertiefung (12) und dem zweiten Zwischenbereich (5) im Wesentlichen in Ausrichtung mit der ersten Vertiefung (12) entlang der Achse des Verbinders angeordnet ist, wobei die dritte Vertiefung (15) von der ersten Vertiefung (12) mittels einer ersten geneigten Ebene (17), die in Richtung zur dritten Vertiefung (15) gewandt ist, und einer zweiten geneigten Ebene (16), die an die dritten Vertiefung (15) angrenzt und so ausgerichtet ist, eine Kante zu bilden, deren Dicke sich in Richtung zum Schlitz auf der gegenüberliegenden Seite der elastischen axialen Verlängerung (7) zum Schlitz angrenzend an die zweite Vertiefung (13) verringert, getrennt ist.

18. Verbinder für gewellte Rohre nach Anspruch 5 oder Anspruch 6, in welchem die Eingriffseinrichtungen zumindest zwei elastische axiale Verlängerungen (7) umfassen, wobei jede der elastischen axialen Verlängerungen (7) einen ersten Vorsprung (116) und einen zweiten Vorsprung (114) aufweist, und in welchem die Ringmutter (200) innen zumindest zwei Zähne (205) aufweist, von denen jeder zwischen dem ersten Vorsprung (116) und dem zweiten Vorsprung (114) einrasten kann.

19. Verbinder für gewellte Rohre nach Anspruch 7, in welchem jede der elastischen axialen Verlängerungen (7) den dritten Vorsprung (115) aufweist, der zwischen dem ersten Vorsprung (116) und dem zweiten Vorsprung (114) angeordnet ist.

20. Verbinder für gewellte Rohre nach Anspruch 18 oder Anspruch 19, umfassend eine manschettenförmige Dichtung (270; 280) mit einem Ende (271; 281), das mit dem Ende eines gewellten Rohrs in Eingriff gelangen kann.

21. Verbinder für gewellte Rohre nach Anspruch 20, in welchem das Ende (271) der Dichtung (270) umgebördelt ist und eine Verlängerung (272) umfasst, die einen Sitz (273) zum Aufnehmen einer Basiswand eines Kanals des gewellten Rohrs erzeugt.

22. Verbinder für gewellte Rohre nach Anspruch 20, in welchem das Ende (281) der Dichtung (280) einen ringförmigen Rand (282) umfasst, der dem Inneren der Dichtung (280) zugewandt ist, um so eine Kante zu bilden, die mit einer Schulter (123) der Innenwand des Körpers (100) verbunden ist.

23. Verbinder für gewellte Rohre nach einem der Ansprüche 10 bis 17, umfassend Anschlageinrichtungen (8, 26; 8, 207) zum Zurückhalten der Ringmutter (2; 200) in Anschlag mit dem ersten Zwischenbereich (4) des Körpers (1; 100).

24. Verbinder für gewellte Rohre nach Anspruch 23, in welchem die Anschlageinrichtungen (8, 26; 8, 207) zumindest zwei Zähne (8), die auf der Außenwand des zweiten Zwischenbereichs (5) angeordnet sind, und entsprechende Vertiefungen (26; 207) in der Innenwand der Ringmutter (2; 200) zum Aufnehmen der Zähne (8) umfassen.

25. Verbinder für gewellte Rohre nach einem der Ansprüche 8 bis 24, in welchem die Kopfenden der elastischen axialen Verlängerungen (7) Eingriffszähne (9) zum Einsetzen in die Kanäle eines gewellten Rohrs und eine nach außen vorsehende Lippe (10) zum Zurückhalten der Ringmutter (2; 200), damit diese nicht von dem Körper (1; 100) gleitet, umfassen.

26. Verbinder für gewellte Rohre nach einem der Ansprüche 8 bis 25, in welchem die Ringmutter (2; 200) ein Ende (2b), das auf den Körper (1; 100) passt, und ein Ende (2a) umfasst, das geringfügig abgeschrägt ist, um die radiale Biegung der elastischen axialen Verlängerungen (7) zu erleichtern.

27. Verbinder für gewellte Rohre nach Anspruch 26, in welchem der zweite Zwischenbereich (5) eine externe Lagemarkierung (ON-OFF) trägt und die Ringmutter (2; 200) auf der Außenseite des Endes (2b) eine Markierung (A, B) trägt, die mit der Lagemarkierung zusammenwirkt, um den Betriebszustand der Ringmutter anzuzeigen.

28. Verbinder für gewellte Rohre nach einem der Ansprüche 1 bis 27, in welchem die Ringmutter (2; 200) externe Vertiefungen (20) aufweist, um ein Greifen mit den Fingern einer Hand zu erleichtern.

29. Verbinder für gewellte Rohre nach einem der Ansprüche 1 bis 28, in welchem die Ringmutter (2; 200) auf ihrer Endwand zumindest zwei Sitze (25; 206) für ihre Entfernung von dem Körper (1; 100) mittels Werkzeugen aufweist.

30. Verbinder für gewellte Rohre nach einem der Ansprüche 26 bis 29, in welchem der Bereich (2a) der Ringmutter (2) auf seiner Innenwand zumindest zwei verdickte Bereiche (24) aufweist, um einen besseren Widerstand gegen das Lösen der Zähne (9) aus den Kanälen des gewellten Rohrs sicherzustellen, wenn sich die Ringmutter im zweiten Betriebszustand befindet.

## Revendications

1. Connecteur pour conduits ondulés, comprenant un corps (1 ; 100) qui peut loger un conduit ondulé en étant monté sur celui-ci, et qui possède un moyen d'engagement (7) qui peut être monté dans des canaux du conduit ondulé et peut être actionné afin de retenir le conduit ondulé dans le corps (1; 100), ledit connecteur comprenant une bague (2 ; 200) qui est mobile sur le corps (1 ; 100) et qui, dans une première condition d'opération, laisse le moyen d'engagement (7) libre de se désengager des canaux du conduit ondulé et, dans une seconde condition d'opération, maintient le moyen d'engagement (7) monté dans les canaux, **caractérisé en ce que** ledit connecteur comprend des moyens de sécurité (12, 23 ; 114, 116, 204) permettant de verrouiller la bague (2 ; 200) dans la seconde condition d'opération et lesdits moyens de verrouillage de sécurité peuvent être activés par encliquetage par rotation de la bague (2 ; 200) sur le corps (1 ; 100).

2. Connecteur pour conduits ondulés selon la revendication 1, dans lequel les moyens de verrouillage de sécurité (12, 23 ; 114, 116, 204) sont déverrouillables.

3. Connecteur pour conduits ondulés selon la revendication 1 ou la revendication 2, dans lequel les moyens de verrouillage de sécurité comprennent un premier évidement (12) et une languette respective (23) pouvant s'engager par encliquetage dans l'évidement (12).

4. Connecteur pour conduits ondulés selon la revendication 3, lorsqu'elle dépend de la revendication 2, comprenant un cran (14) qui est associé à l'évidement (12) et au-dessus duquel la languette (23) peut passer lorsque la bague (2) tourne pour déverrouiller les moyens de verrouillage de sécurité (12, 14, 23) de la bague (2).

5. Connecteur pour conduits ondulés selon les revendications 1 ou 2, dans lequel les moyens de verrouillage de sécurité comprennent une première saillie (116), une deuxième saillie (114) et une dent (205) venant s'engager par encliquetage entre la première saillie (116) et la deuxième saillie (114).

6. Connecteur pour conduits ondulés selon la revendication 5, dans lequel la saillie (115) constitue un élément d'arrêt qui peut être facilement franchi par la dent (205) suite à une rotation dans le sens des aiguilles d'une montre de la bague (200) et qui peut être difficilement franchi suite à une rotation dans le sens inverse des aiguilles d'une montre de la bague (200).

7. Connecteur pour conduits ondulés selon la revendication 5 ou la revendication 6, comprenant une troisième saillie (115) positionnée entre la première saillie (116) et la deuxième saillie (114), la dent (205) venant s'engager par encliquetage entre la première saillie (116) et la troisième saillie (115).

8. Connecteur pour conduits ondulés selon l'une quelconque des revendications 4 à 7, dans lequel le corps (1 ; 100) présente une section transversale interne cylindrique et comprend une première extrémité (3) et une seconde extrémité (6), la seconde extrémité comprenant au moins deux prolongements axiaux souples (7).

9. Connecteur pour conduits ondulés selon la revendication 8, dans lequel la première extrémité (3) est filetée.

10. Connecteur pour conduits ondulés selon la revendication 8 ou la revendication 9, dans lequel le corps (1 ; 100) comprend une première partie intermédiaire de forme extérieure polygonale (4) entre la première extrémité (3) et la seconde extrémité (6).

11. Connecteur pour conduits ondulés selon la revendication 10, dans lequel le corps (1 ; 100) comprend une seconde partie intermédiaire cylindrique (5) entre la première partie intermédiaire (4) et la seconde extrémité (6).

12. Connecteur pour conduits ondulés selon la revendication 11, comprenant un joint (29) formé par une partie annulaire (30) dont la paroi interne définit un seul plan continu avec la paroi interne de la seconde extrémité (6), et par un rebord annulaire (31) tourné vers l'intérieur par rapport au joint de manière à terminer dans le plan défini par la paroi interne de l'extrémité (3).

13. Connecteur pour conduits ondulés selon la revendication 10 ou la revendication 11, dans lequel un cap (18) tourné vers la seconde extrémité (6) est formé sur la paroi interne du corps (1) à proximité du point de connexion entre la première extrémité (3) et la première partie intermédiaire (4).

14. Connecteur pour conduits ondulés selon la revendication 13, comprenant un joint (27) présentant une extrémité à collerette s'engageant avec le cap (18).

15. Connecteur pour conduits ondulés selon l'une quelconque des revendications 8 à 14, dans lequel chacun des prolongements axiaux souples (7) présente un premier évidement (12) et la bague (2) porte en son intérieur au moins deux languettes (23) dont chacune peut s'engager par encliquetage dans un premier évidement respectif (12).

16. Connecteur pour conduits ondulés selon la revendication 15, dans lequel chaque prolongement axial souple (7) présente un deuxième évidement (13), essentiellement aligné avec le premier évidement (12) transversalement par rapport à l'axe du connecteur et séparé du premier évidement (12) par le cran (14), le deuxième évidement (13) étant ouvert dans une fente adjacente entre les prolongements axiaux souples (7).

17. Connecteur pour conduits ondulés selon la revendication 16, comprenant, sur chaque prolongement axial souple (7), un troisième évidement (15) positionné entre le premier évidement (12) et la seconde partie intermédiaire (5) essentiellement en alignement avec le premier évidement (12) le long de l'axe du connecteur, le troisième évidement (15) étant séparé du premier évidement (12) au moyen d'un premier plan incliné (17) tourné vers le troisième évidement (15) et d'un second plan incliné (16) adjacent au troisième évidement (15) et tourné de manière à former un bord dont l'épaisseur est réduite vers la fente sur le côté opposé du prolongement axial souple (7) jusqu'à la fente adjacente au deuxième évidement (13).

18. Connecteur pour conduits ondulés selon la revendication 5 ou la revendication 6, dans lequel le moyen d'engagement comprend au moins deux prolongements axiaux souples (7), chacun des prolongements axiaux souples (7) portant une première saillie (116) et une deuxième saillie (114), et dans lequel la bague (200) porte en son intérieur au moins deux dents (205), chacune venant s'engager par encliquetage entre la première saillie (116) et la deuxième saillie (114).

19. Connecteur pour conduits ondulés selon la revendication 7, dans lequel chacun des prolongements axiaux souples (7) porte la troisième saillie (115) positionnée entre la première saillie (116) et la deuxième saillie (114).

20. Connecteur pour conduits ondulés selon la revendication 18 ou la revendication 19, comprenant un joint en forme de manchon (270 ; 280) présentant une extrémité (271 ; 281) pouvant s'engager avec l'extrémité d'un conduit ondulé.

21. Connecteur pour conduits ondulés selon la revendication 20, dans lequel l'extrémité (271) du joint (270) présente une collerette et comprend un prolongement (272) créant un siège (273) pour loger une paroi de base d'un canal du conduit ondulé.

22. Connecteur pour conduits ondulés selon la revendication 20, dans lequel l'extrémité (281) du joint (280) comprend un rebord annulaire (282) tourné vers l'intérieur du joint (280) de manière à former une corniche couplée à un épaulement (123) de la paroi interne du corps (100).

23. Connecteur pour conduits ondulés selon l'une quelconque des revendications 10 à 17, comprenant des moyens d'arrêt (8, 26 ; 8, 207) permettant de retenir la bague (2; 200) en butée contre la première partie intermédiaire (4) du corps (1 ; 100).

24. Connecteur pour conduits ondulés selon la revendication 23, dans lequel les moyens d'arrêt (8, 26 ; 8, 207) comprennent au moins deux dents (8) positionnées sur la paroi externe de la seconde partie intermédiaire (5) et des évidements respectifs (26 ; 207) dans la paroi interne de la bague (2 ; 200) pour loger les dents (8).

25. Connecteur pour conduits ondulés selon l'une quelconque des revendications 8 à 24, dans lequel les extrémités de tête des prolongements axiaux souples (7) comprennent des dents d'engagement (9) pouvant s'insérer dans les canaux d'un conduit ondulé, et une lèvre faisant saillie vers l'extérieur (10) permettant d'empêcher la bague (2 ; 200) de se désolidariser du corps (1 ; 100).

26. Connecteur pour conduits ondulés selon l'une quelconque des revendications 8 à 25, dans lequel la bague (2 ; 200) présente une extrémité (2b) permettant le montage sur le corps (1 ; 100) et une extrémité (2a) légèrement conique pour faciliter la flexion radiale des prolongements axiaux souples (7).

27. Connecteur pour conduits ondulés selon la revendication 26, dans lequel la seconde partie intermédiaire (5) porte une inscription externe (ON-OFF) et la bague (2 ; 200) porte, sur l'extérieur de l'extrémité (2b), un indicateur (A, B) coopérant avec l'inscription pour identifier la condition d'opération de la bague.

28. Connecteur pour conduits ondulés selon l'une quelconque des revendications 1 à 27, dans lequel la bague (2 ; 200) présente des évidements externes (20) facilitant la préhension par les doigts de la main.

29. Connecteur pour conduits ondulés selon l'une quelconque des revendications 1 à 28, dans lequel la bague (2 ; 200) présente, sur sa paroi d'extrémité, au moins deux sièges (25 ; 206) permettant de la retirer du corps (1 ; 100) à l'aide d'outils.

30. Connecteur pour conduits ondulés selon l'une quelconque des revendications 26 à 29, dans lequel la partie (2a) de la bague (2) présente, sur sa paroi interne, au moins deux zones plus épaisses (24) assurant une meilleure résistance au désengagement des dents (9) par rapport aux canaux du conduit ondulé lorsque la bague est dans la seconde condition d'opération.
